# EUROPÄISCHE PATENTANMELDUNG

(11) **EP 1 026 180 A1**
(43) Veröffentlichungstag der Anmeldung: **09.08.2000**
(21) Anmeldenummer: 00101933.0
(22) Anmeldetag: 01.02.2000
(51) Int. Cl.: C08F 10/00, C08F 4/602, C08F 4/70

(54) **Verfahren zur Herstellung von Polyolefinen mit breiter Molekulargewichtsverteilung**

(30) Priorität: 01.02.1999 DE 19903695
(71) Anmelder: Elenac GmbH, 77694 Kehl (DE)
(72) Erfinder: Kristen, Marc Oliver Dr., 67117 Limburgerhof (DE); Lilge, Dieter Dr., 67117 Limburgerhof (DE); Jutzi, Peter, Prof. Dr., 33613 Bielefeld (DE); Mueller, Christian, 33739 Bielefeld (DE)
(74) Vertreter: Meyer, Thomas

(57) **Zusammenfassung**

Verfahren zur Herstellung von Polyolefinen bei Drücken von 5 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann, wobei man die Reaktionstemperatur so einstellt, daß das resultierende Polyolefin eine Molekulargewichtsverteilung M_{W}/M_{N}, gemessen durch Gelpermeationschromatographie, von ≥5,0 aufweist.

## Beschreibung

Gegenstand der vorliegenden Erfindung ist ein Verfahren zur Herstellung von Polyolefinen bei Drücken von 5 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann.

Katalysatorsysteme mit einem einheitlich definierten aktiven Zentrum, sogenannte Singel-site-Katalysatoren, gewinnen bei der Polymerisation von Olefinen immer mehr an Bedeutung. Diese Katalysatorsysteme führen zu Polymerisaten mit engen Molekulargewichtsverteilungen, was in besonders günstigen mechanischen Eigenschaften resultiert. Durch die enge Molekulargewichtsverteilung lassen sich derartig hergestellte Polymere jedoch oft schwer verarbeiten. Die Polymerisate lassen sich oft nur unter Absenkung der Produktivität der Verarbeitungsanlagen verarbeiten und führen häufig zu Produktionsverlusten, z.B. bei der Folienerzeugung.

Um die Verarbeitung solcher Polymere zu verbessern, wird immer öfter versucht, Polymermischungen, sogenannte Blends, herzustellen. Solche Blends lassen sich weitaus besser verarbeiten und besitzen meist noch in befriedigendem Ausmaß die vorteilhaften mechanischen Eigenschaften der single-site-katalysierten Polymere.

Derartige Polymermischung oder, allgemeiner ausgedrückt, Polymerisate mit verbreiterter oder bimodaler Molekulargewichtsverteilung, lassen sich auf verschiedene Weise erhalten. So können natürlich zwei oder mehrere Polymergranulate oder Polymergriese miteinander z.B. in einem Extruder homogen vermischt werden. Der Nachteil dieser Methode besteht in zusätzlichen Verarbeitungskosten durch den zusätzlichen Verarbeitungsschritt.

Eine weitere Möglichkeit zur Herstellung solcher Polymerisate ist der Einsatz einer Reaktorkaskade, wobei zwei Reaktoren mit unterschiedlichen Reaktionsbedingungen hintereinander gekoppelt werden. Der Nachteil solcher Kaskadenverfahren liegt vor allem in dem zusätzlichen apparativen Aufwand, zum anderen aber auch in der Schwierigkeit der Einhaltung konstanter Reaktionsbedingungen.

Eine dritte Möglichkeit zur Herstellung bimodaler oder multimodaler Polymerisate besteht in einer Vorvermischung mehrerer Katalysatoren mit verschiedenen Polymerisationseigenschaften. Solche Polymerisationsverfahren unter Einsatz mehrerer Katalysatoren sind z.B. aus EP-A 128 045, EP-A 0 619 325 oder EP-A 0 516 018 bekannt.

Von den Metallocenkatalysatoren, der bekanntesten Gruppe der Single-site-Katalysatoren, werden immer mehr chemische Variationen bekannt. So wurden z.B. auch Metallocenverbindungen mit Substituenten beschrieben, die eine Lewis-Base-Gruppe tragen. Bei den Lewis-Base-Gruppen handelt es sich in erster Linie um Sauerstoff- oder Stickstoff-Funktionalitäten. Unverbrückte Metallocenkomplexe oder Metallocenkatalysatoren mit Lewis-Basen-Funktionalitäten werden z.B. in WO 97/27227, US-A 5 563 284 und DE-A 43 03 647 beschrieben. Verbrückte Metallocenkatalysatoren mit Lewis-Base-Substituenten werden in EP-A 0 608 054 beschrieben. Allen diesen Beschreibungen ist jedoch gemein, daß, soweit Polymerisationen mit diesen Metallocenkomplexen beschrieben werden, die erhaltenen Polymerisate enge Molekulargewichtsverteilungen aufweisen, wie sie für Single-site-Katalysatoren typisch sind.

Dem erfindungsgemäßen Verfahren lag daher die Aufgabe zugrunde, unter Einsatz nur eines Katalysatorkomplexes und ohne großen apparativen Aufwand Polyolefinpolymerisate zu erhalten, welche gute Verarbeitungseigenschaften und eine breite Molekulargewichtsverteilung aufweisen.

Demgemäß wurde ein Verfahren zur Herstellung von Polyolefinen bei Drücken von 5 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Kobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann, gefunden, welches Verfahren dadurch gekennzeichnet ist, daß man die Reaktionstemperatur so einstellt, daß das resultierende Polyolefin eine Molekulargewichtsverteilung M_{W}/M_{N}, gemessen durch Gelpermeationschromatographie, von ≥5,0 aufweist.

Weiterhin wurde die Verwendung einer solchen metallorganischen Verbindung zur Herstellung von Polyolefinen mit einer Molekulargewichtsverteilung M_{W}/M_{N}, gemessen durch Gelpermeationschromatographie, von ≥5,0 gefunden.

Der vorliegenden Erfindung liegt die Beobachtung zugrunde, daß bei Einsatz spezieller Singel-site-Katalysatorsysteme, nämlich solcher, die eine Lewis-Basen-Funktionalität aufweisen, die in der Lage ist, an das zentrale Metallatom des Komplexes zu koordinieren, bei bestimmten Temperaturen eine Verbreiterung der Molekulargewichtsverteilung oder sogar eine bimodale Molekulargewichtsverteilung auftritt. In der Regel wird bei höheren Temperaturen eine übliche enge Molekulargewichtsverteilung beobachtet. Bei Absenken der Polymerisationstemperatur tritt jedoch eine Verbreiterung der Molekulargewichtsverteilung auf, so daß durch geeignete Temperaturführung unter Einsatz nur eines Katalysatorkomplexes eine Variation der Molekulargewichtsverteilung in Richtung auf gewünschte Polymerisateigenschaften möglich ist.

Das erfindungsgemäße Verfahren ist prinzipiell zur Herstellung ganz verschiedener Polyolefine geeignet. So lassen sich erfindungsgemäß z.B. Ethylen, Propylen oder höhere α-Olefine allein oder auch in Mischung dieser Monomere polymerisieren bzw. copolymerisieren. Insbesondere bei Katalysatorsystemen, die auf metallorganischen Verbindungen der Gruppe VIIIa des Periodensystems beruhen, lassen sich auch vorteilhaft polare Comonomere wie Vinylacetat, Acrylsäure- oder Methacrylsäureester oder diese Säuren selbst mit Ethylen oder α-Olefinen copolymerisieren. Auch zur Herstellung vinylaromatischer Polymerisate ist das Verfahren geeignet.

Das erfindungsgemäße Verfahren kann in einem Druckbereich von 5 bis 4.000 bar durchgeführt werden. Dabei läßt sich das Verfahren in den üblichen dem Fachmann bekannten Polymerisationsanlagen und nach den üblichen Polymerisationsverfahren betreiben. Zu nennen sind z.B. Polymerisationsverfahren in Gasphasenreaktoren, insbesondere in Gasphasenwirbelschichtreaktoren, Polymerisationen in Lösung oder Suspensionspolymerisationsverfahren. Die genannten Verfahren werden üblicherweise bei Drücken zwischen 5 und 50 bar, insbesondere zwischen 15 und 40 bar betrieben. Das erfindungsgemäße Verfahren läßt sich jedoch auch in Hochdruckpolymerisationsverfahren z.B. im gerührten Autoklaven oder in Rohrreaktoren durchführen, wobei dabei Drücke von 500 bis 4.000 bar, insbesondere von 1.000 bis 3.000 bar und Temperaturen von 160°C bis 350°C, insbesondere von 200°C bis 240°C angewendet werden.

Die Reaktionstemperatur des erfindungsgemäßen Verfahrens hängt einerseits von der eingesetzten katalytisch aktiven metallorganischen Verbindung und andererseits von der gewünschten Molekulargewichtsverteilung des Polymerisats ab. Werden als katalytisch aktive Komplexe beispielsweise verbrückte Zirkonocene eingesetzt, so beobachtet man in der Regel, zumindest in Niederdruckverfahren, bei Temperaturen um 90°C noch keine Verbreiterung der Molekulargewichtsverteilung im Vergleich zu üblichen Single-site-Polymerisationen. Bei Absenken der Temperatur auf 70°C bis 20°C tritt jedoch üblicherweise die gewünschte Verbreiterung der Molekulargewichtsverteilung und oft das Auftreten einer bimodaler Molekulargewichtsverteilung der Polymerisate auf. Die geeignete Polymerisationstemperatur ist also durch wenige Vorversuche leicht zu ermitteln.

Das erfindungsgemäße Verfahren wird bei einer Reaktionstemperatur durchgeführt, die in einer Molekulargewichtsverteilung von ≥5,0, vorzugsweise ≥7,0 und besonders bevorzugt ≥10,0 resultiert.

Ein wichtiges Merkmal des erfindungsgemäßen Verfahrens besteht darin, daß die metallorganischen Verbindungen, die Bestandteil des Katalysatorsystems sind, eine Lewis-Basen-Funktionalität aufweisen, die so angeordnet ist, daß sie intramolekular an das zentrale Metallatom der metallorganischen Verbindung koordinieren kann. Dieses Merkmal kann durch eine Vielzahl möglicher chemischer Strukturen und Anordnungen sowie durch eine Vielzahl von Substitutionsmustern erreicht werden. Kritisch ist daher weniger die Art der Substitution oder die chemische Natur der Lewis-Base-Liganden als vielmehr die Möglichkeit der genannten Koordinationsfähigkeit. Bei der Auswahl geeigneter metallorganischer Verbindungen kann z.B. auf einfache Weise mit Hilfe von Molekülmodellen überprüft werden, ob ein bestimmter Katalysatorkomplex das Erfordernis, daß nämlich die Lewis-Basen-Funktionalität an das Metallatom koordinieren kann, erfüllt ist.

Die in dem erfindungsgemäßen Verfahren eingesetzten Katalysatorsysteme können als katalytisch aktive Verbindung verschiedene metallorganische Verbindungen enthalten. Eine bevorzugte Ausführungsform des Verfahrens ist dadurch gekennzeichnet, daß man als metallorganische Verbindung einen Metallocenkomplex der allgemeinen Formel I einsetzt 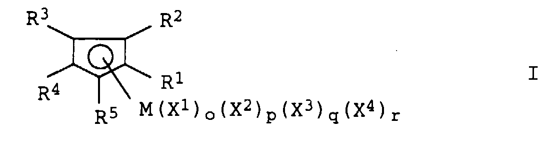 in der die Substituenten und Indices folgende Bedeutung haben:
- M: Titan, Zirkonium, Hafnium oder Vanadium,
- R¹ bis R⁵: Wasserstoff, C₁- bis C₁₀-Alkyl, 5- bis 7-gliedriges Cycloalkyl, das seinerseits ein C₁- bis C₁₀-Aryl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, eine Gruppe mit Lewis-Basen-Funktionalität oder gemeinsam mit einem Rest X¹ bis X⁴ ein Brückenglied zum Metallatom M,
- R⁶: C₁- bis C₁₀-Alkyl, C₆- bis C₁₅-Aryl oder C₃- bis C₁₀-Cycloalkyl,
- X¹ bis X⁴: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹², -NR¹²R¹³ oder 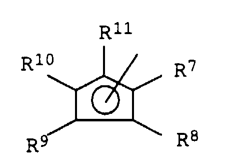 mit
- R¹² und R¹³: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- R⁷ bis R¹¹: Wasserstoff, C₁- bis C₁₀-Alkyl, 5 bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹⁴)₃, eine Gruppe mit Lewis-Basen-Funktionalität oder gemeinsam mit einem Rest R¹ bis R⁵ ein Brückenglied zwischen den Cyclopentadienylsystemen,
mit
- R¹⁴: C₁- bis C₁₀-Alkyl, C₆- bis C₁₅-Aryl oder C₃- bis C₁₀-Cycloalkyl,
und
- o, p, q, r: ganze Zahlen im Bereich 0 bis 4, wobei die Summe o+p+q+r+1 der Wertigkeit von M entspricht,
mit der Bedingung, daß entweder mindestens einer der Reste R¹ bis R⁵ oder R⁷ bis R¹¹ eine Gruppe mit Lewis-Basen-Funktionalität bedeutet oder das Brückenglied zwischen den Cyclopentadienylsystemen oder zwischen einem Cyclopentadienylsystem und dem Metallatom M eine solche Gruppe mit Lewis-Basen-Funktionalität trägt.

Bevorzugte Metalle M sind Titan und Zirkonium, insbesondere Zirkonium.

Als Substituenten R¹ bis R⁵ kommen neben Wasserstoff, insbesondere C₁- bis C₆-Alkylgruppen, ganz besonders Methyl, Ethyl, Propyl, n-Butyl, iso-Butyl und tert.-Butyl in Betracht. Dabei kann der Cyclopentadienylkern einfach oder mehrfach, vorzugsweise einfach oder zweifach mit solchen Alkylgruppen substituiert sein. Neben diesen alkylsubstituierten Cyclopentadienylresten sind insbesondere Cyclopentadienylsysteme geeignet, bei denen zwei benachbarte Reste R¹ bis R⁵ zu cyclischen Gruppen verbunden sind, die ihrerseits wiederum Substituenten tragen können. Zu nennen sind beispielsweise substituierte und unsubstituierte Indenyl-, Tetrahydroindenyl-, Benzindenyl- und Fluorenylreste. Neben den genannten Substituenten kann zusätzlich noch ein Substituent mit einer Lewis-Basen-Gruppe vorhanden sein.

Von den Liganden X¹ bis X⁴ ist in der Regel ein Rest ebenfalls ein Cyclopentadienylsystem, so daß also ein Biscyclopentadienylkomplex vorliegt. Weiterhin kann einer der Reste X¹ bis X⁴ jedoch auch ein Brückenglied darstellen, welches mit dem in Formel I abgebildeten Cyclopentadienylkern verbunden ist, so daß ein Monocyclopentadienylkomplex vorliegt. Die weiteren Reste X¹ bis X⁴ sind vorzugsweise Halogen, insbesondere Chlor, oder C₁- bis C₄-Alkyl, wobei Chlor als Ligand insbesondere für Vorstufen des katalytisch aktiven Komplexes besonders vorteilhaft ist.

Für die Reste R⁷ bis R¹¹ sind die gleichen Reste bevorzugt, wie sie für die Reste R¹ bis R⁵ genannt wurden.

Für den Einsatz in dem erfindungsgemäßen Verfahren haben sich besonders solche metallorganischen Verbindungen als vorteilhaft erwiesen, die einen verbrückten Metallocenkomplex aufweisen. Unter verbrückten Metallocenkomplexen sollen dabei solche verstanden werden, die entweder eine Brücke zwischen einem Cyclopentadienylrest und dem zentralen Metallatom aufweisen, oder solche, in denen das Brückenglied zwei Cyclopentadienylreste miteinander verbindet.

Eine besonders vorteilhafte Ausführungsform des erfindungsgemäßen Verfahrens ist dadurch gekennzeichnet, daß der Metallocenkomplex der Formel I ein Brückenglied zwischen zwei Cyclopentadienylsystemen aufweist.

Eine weitere besonders vorteilhafte Ausführungsform besteht in einem Verfahren, welches dadurch gekennzeichnet ist, daß das Brückenglied zwischen zwei Cyclopentadienylsystemen die Struktur der allgemeinen Formel II aufweist 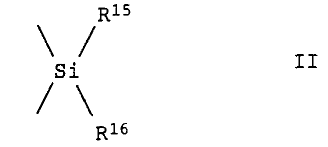 wobei
- R¹⁵ und R¹⁶: einen C₁- bis C₂₀-Hydrocarbylrest mit mindestens einem sauerstoff-, schwefel-, stickstoff- oder phosphorhaltendem Substituenten
bedeutet.

Als Reste R¹⁵ und R¹⁶ kommen dabei chemisch sehr unterschiedliche C₁- bis C₂₀-Hydrocarbylreste in Betracht. Zu nennen sind beispielsweise Alkoxyphenylreste, welche über eine Alkylengruppe mit dem Siliciumatom verbunden sind. Auch Alkylamino- oder Alkoxygruppen, welche über 1 bis 10 C-Atome lange Alkylenreste mit dem Silicium verbunden sind, kommen in Betracht. Weiterhin sind Reste zu nennen, bei denen die Lewis-Basen-Funktionalität in einer Thioether- oder Estergruppe basiert. Zu nennen sind beispielsweise C₁- bis C₄-Alkylester von Carbonsäuregruppen, wobei die Carbonsäure wiederum über einen Alkylenrest an das Siliciumatom gebunden sein kann. Neben den Alkoxyfunktionen kommen auch cyclische Ether wie Tetrahydrofuranylgruppen, welche ebenfalls über einen geeigneten Alkylenrest an das Siliciumatom gebunden sind, in Betracht. Neben den Silylbrücken der allgemeinen Formel II kommen auch analoge Brückenglieder mit Germaniumatomen oder C₁-bis C₃-Alkylengruppen, die in analoger Weise wie das Siliciumatom substituiert sein können, in Betracht.

Eine weitere bevorzugte Ausführungsform des Verfahrens ist dadurch gekennzeichnet, daß mindestens einer der Reste R¹ bis R⁵ oder R⁷ bis R¹¹ einen Rest der allgemeinen Formel IIIa oder IIIb bedeutet

―(CR¹⁷R¹⁸)ₙ―YR¹⁹R²⁰ IIIa

―(CR¹⁷R¹⁸)ₙ―ZR¹⁹ IIIb

in welchen die Variablen die folgende Bedeutung haben:
- R¹⁷ und R¹⁸: Wasserstoff, C₁- bis C₁₀-Alkyl, C₆- bis C₁₅-Aryl oder C₃- bis C₁₀-Cycloalkyl,
- R¹⁹ und R²⁰: C₁- bis C₁₀-Alkyl, C₆- bis C₁₅-Aryl oder C₃- bis C₁₀-Cycloalkyl,
- n: eine ganze Zahl im Bereich von 0 bis 10
- Y: Stickstoff oder Phosphor und
- Z: Sauerstoff oder Schwefel.

Die Reste R¹⁷ und R¹⁸ sind dabei vorzugsweise Wasserstoff oder niedriges Alkyl wie Methyl oder Ethyl, die Reste R¹⁹ und R²⁰ sind vorzugsweise kurze Alkylgruppen wie Methyl, Ethyl, Propyl oder Butyl. n ist vorzugsweise eine Zahl zwischen 2 und 6, insbesondere 2 oder 4. y ist vorzugsweise Stickstoff, z vorzugsweise Sauerstoff.

Als besonders vorteilhaft zum Einsatz in dem erfindungsgemäßen Verfahren haben sich Metallocenkomplexe erwiesen, bei denen eines der Cyclopentadienylsysteme ein substituiertes oder unsubstituiertes Fluorenylsystem ist.

Neben den Metallocenkomplexen können in dem erfindungsgemäßen Verfahren auch andere metallorganische Verbindungen eingesetzt werden. Prinzipiell sind alle dem Fachmann bekannten Single-site-Katalysatoren wie sie etwa in WO 96/23010, WO 98/27124 oder WO 96/23004 beschrieben werden, geeignet, vorausgesetzt, daß sie in geeigneter Weise mit einem Substituenten mit Lewis-Basen-Funktionalität ausgestattet sind. Eine weitere Ausführungsform des erfindungsgemäßen Verfahrens ist daher dadurch gekennzeichnet, daß man als metallorganische Verbindung eine Verbindung der allgemeinen Formel IV einsetzt 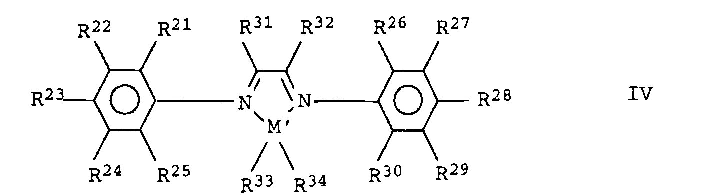 wobei die Variablen die folgende Bedeutung haben:
- R²¹ bis R³²: Wasserstoff, C₁- bis C₁₀-Alkyl, 5- bis 7-gliedriges Cycloalkyl, das seinerseits ein C₁- bis C₁₀-Alkyl als Substituent tragen kann, C6- bis C15-Aryl oder Arylalkyl, wobei gegebenenfalls auch zwei benachbarte Reste gemeinsam für 4 bis 15 C-Atome aufweisende cyclische Gruppen stehen können, Si(R⁶)₃ oder eine Gruppe mit Lewis-Basen-Funktionalität, wobei mindestens ein Rest R²¹ bis R³² eine solche Gruppe mit Lewis-Basen-Funktionalität sein muß,
- R³³ und R³⁴: Fluor, Chlor, Brom, Jod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹² oder -NR¹²R¹³, und
- M': ein Metall der Gruppe VIIIa des Periodensystems.

Als Reste R²¹ bis R³² kommen neben Wasserstoff insbesondere niedere Alkylgruppen wie Methyl, Ethyl, Propyl oder Butyl in Betracht, wobei die aromatischen Ringsysteme vorzugsweise ein- bis dreifach mit solchen Alkylgruppen substituiert sind. Für die Struktur der Gruppe mit Lewis-Basen-Funktionalität gilt das bereits für die entsprechenden Metallocenkomplexe Gesagte. Vorzugsweise bedeutet mindestens einer der Reste R²¹ bis R³² einen Rest der allgemeinen Formel IIIa oder IIIb.

Erfindungsgemäß ist weiterhin die Verwendung einer metallorganischen Verbindung, wie sie vorhergehend beschrieben wurde, zur Herstellung von Polyolefinen mit einer Molekulargewichtsverteilung M_{W}/M_{N}, gemessen durch Gelpermeationschromatographie, von ≥5,0, vorzugsweise ≥7,0 und besonders bevorzugt ≥10,0.

Die Herstellung der Katalysatorkomplexe kann nach üblichen dem Fachmann bekannten Methoden erfolgen. Hinweise zur Herstellung von Metallocenkomplexen können beispielsweise aus WO 97/27227 erhalten werden.

Um katalytische Polymerisationsaktivität zu entfalten, müssen die genannten metallorganischen Komplexe in der Regel durch einen Cokatalysator aktiviert werden. Die Methoden zur Aktivierung der Katalysatorkomplexe sind allgemein bekannt und bilden keine Besonderheit dieser Erfindung. So können beispielsweise die Metallocenkomplexe in bekannter Weise mit Alumoxanen, insbesondere mit Methylalumoxan, oder mit ionisierenden Verbindungen, die in der Lage sind, ein Metalloceniumkation in nicht koordinierender Weise zu komplexieren, aktiviert werden.

### Beispiele

Die Ligand- und Komplexsynthesen wurden unter Ausschluß von Luft und Feuchtigkeit durchgeführt. Die verwendeten Apparaturen und Reagenzien waren entsprechend vorbereitet. 9-Fluorenyl-dimethylchlorsilan wurde nach der Literaturmethode hergestellt (J. Organomet. Chem. 1995, 497, 1). Die funktionalisierten Cyclopentadienylverbindungen und deren Kaliumderivate wurden in Anlehnung an Organometallics, 1996, 15, 4153 und J. Organomet. Chem., 1994, 480, C18, hergestellt. Cyclopentadienyl-dimethylchlorsilan wurde wie in Monatsheft für Chemie, 1981, 112, 887 beschrieben, hergestellt.

Für die GPC-Untersuchungen wurden folgende Bedingungen in Anlehnung an DIN 55672 gewählt: Lösungsmittel: 1,2,4-Trichlorbenzol, Fluß: 1 mL/min, Temperatur: 140°C, Kalibrierung: PE-Standards, Gerät: Waters 150C.

### Beispiel 1

Darstellung von Dimethylsilyl[3-(N,N-Dimethylaminoethyl)cyclopentadienyl-fluorenyl]-zirconiumdichlorid

Zu einer Lösung von 5,90 g (22,8 mmol) 9-Fluorenyl-dimethylchlorsilan in 75 ml THF wurde bei -50°C langsam eine Lösung von 4,00 g (22,8 mmol) N,N-Dimethylaminoethyl-cyclopentadienyl-Kalium getropft. Man ließ die sich bildende Suspension langsam auf 20°C aufwärmen und rührte für weitere 18 h. Anschließend wurde vom unlöslichen KCl abfiltriert. Das Solvens wurde vollständig im Vakuum entfernt. Man erhielt 7,25 g (20,2 mmol, 88,6 %) eines gelben, analysenreinen Öls von 2-[3-(N,N-Dimethylaminoethyl)cyclopentadienyl]-2-fluorenyl-dimethylsilan.

¹H-NMR (CDCl₃): δ = -0,21-0,09 (m, 6H, Si-CH₃), 2,25-2,27 (m, 6H, N-CH₃), 2,28-2,57 (m, 4H, N-CH₂-, N-CH₂-CH₂-), 2,67-3,12 (m, 1-2H, Cp-H-allyl), 3,95 (m, 1H, Fluoren-H₉), 5,75-6,52 (m, 2-3H, Cp-H-vinyl), 7,22-7,89 (m, 8H, Fluoren-H).

Zu einer Lösung von 3,25 g (9,0 mmol) der oben erhaltenen Verbindung in 50 ml Diethylether wurden bei -10°C langsam 11,5 ml (18,4 mmol) n-BuLi (1,6 molar in Hexan) getropft. Die gelbe Lösung nahm dabei eine tieforange Farbe an. Das Rühren wurde für weitere 18 h bei 20°C fortgesetzt. In die orange-rote Lösung wurde bei -60°C langsam 2,11 g (9,0 mmol) ZrCl₄ gegeben. Es bildete sich eine tiefrote Suspension, die langsam auf 20°C erwärmt wurde. Das Rühren wurde für weitere 24 h fortgesetzt. Anschließend wurde das Lösungsmittel vollständig im Vakuum entfernt und der Rückstand mit 70 ml Toluol extrahiert. Nach dem Filtrieren verblieb eine tiefrote Lösung, die auf 40 ml eingeengt und bei -30°C aufbewahrt wurde. Der ausgefallene, luft- und feuchtigkeitsempfindliche Feststoff (330 mg, 0,64 mmol, 7 %) wurde abfiltriert und sorgfältig getrocknet.

¹H-NMR (C₆D₆): δ (ppm) = 0,59, 0,60 (2s, 6H, Si-CH₃), 1,98 (s, 6H, N-CH₃), 2,24-2,28 (m, 1H, N-CH₂-), 2,32-2,36 (m, 1H, N-CH₂-), 2,68-2,74 (m, 2H, N-CH₂-CH₂-), 5,31 (pseudo-t, 1H, H_{G}), 5,48 (t, ⁴J=2,8Hz, 1H, H_{F}), 6,42 (pseudo-t, 1H, H_{E}), 7,06-7,12 (m, 2H, H_{D,D'}), 7,29-7,33 (2d, ³J=13,9Hz, 2H, H_{c,c'}), 7,39-7,46 (m, 2H, H_{B,B'}), 7,89-7,92 (2d, ³J=8,3Hz, 2H, H_{A,A},).

### Beispiel 2

Analog zu Beispiel 1 wurde, ausgehend von Diisopropylaminoethylcyclopentadienyl-Kalium die Verbindung Dimethylsilyl[3-(N,N-Di-isopropylaminoethyl)cyclopentadienyl-fluorenyl]-zirconiumdichlorid hergestellt.

¹H-NMR (C₆D₆): δ = 0,62 (s, 3H, Si-CH₃), 0,64 (s, 3H, Si-CH₃), 0,82 (d ³J=6,7Hz, 6H, CH-CH₃), 0,83 (d ³J=6,7Hz, 6H, CH-CH₃), 2,50-2,53 (m, 2H, N-CH₂-CH₂-), 2,68-2,71 (m, 2H, CH-CH₃), 2,79-2,82 (m, 2H, N-CH₂-), 5,39 (pseudo-t, 1H, H_{G}), 5,52 (t, ⁴J=2,8Hz, 1H, H_{F}), 6,41 (pseudo-t, 1H, H_{E}), 7,09-7,12 (m, 2H, H_{D,D'}), 7,31-7,36 (2d, ³J=8,4Hz, 2H, H_{C,C'}), 7,39-7,46 (m, 2H, H_{B,B'}), 7,89-7,92 (2d, ³J=5, 8Hz, H_{A,A'}).

### Beispiel 3

Herstellung von Isopropyliden[3-(N,N-dimethylaminoethyl)cyclopentadienylfluorenyl]zirconiumdichlorid

Zu einer Lösung von 8,60 g (63,0 mmol) N,N-Dimethylaminoethylcyclopentadien in 50 ml Methanol wurden 3,60 g (63,0 mmol) Aceton gegeben. Anschließend tropfte man bei 0°C langsam 7,90 ml (6,76 g, 95,00 mmol) frisch destilliertes Pyrrolidin zu. Die Reaktionslösung nahm bei der Zugabe eine gelbe Farbe an. Man rührte 2 h bei 20°C und gab anschließend 5,60 ml (6,00 g, 100 mmol) Eisessig und 50 ml destilliertes Wasser hinzu. Die organische Phase wurde abgetrennt und die wäßrige Phase viermal mit je 50 ml Diethylether extrahiert. Das Solvens der vereinigten organischen Phasen wurde im Vakuum entfernt und der gelbe, ölige Rückstand in 100 ml n-Pentan aufgenommen. Es wurde über Na₂SO₄ getrocknet und das Lösungsmittel erneut im Vakuum entfernt. Der gelb-orange Rückstand wurde fraktionierend destilliert. Man erhielt 2-N,N-Dimethylaminoethyl-6,6-dimethylfulven als gelbe, leicht viskose Flüssigkeit (7,70 g, 43,5 mmol, 69 %).

### Sdp.: 72-73°C / 0,2 mbar

4,70 g (28,2 mmol) Fluoren, gelöst in 50 ml THF, wurden bei 0°C tropfenweise mit 17,6 ml (28,2 mmol) n-BuLi versetzt. Die Lösung nahm eine orange-rote Farbe an. Man rührte für 1 h bei 20°C und tropfte anschließend bei -78°C eine Lösung von 5,00 g (28,2 mmol) 2-N,N-Dimethylaminoethyl-6,6-dimethylfulven in 10 ml THF hinzu und ließ weitere 16 h bei 20°C rühren. Die resultierende hellrote Lösung wurde mit 30 ml destilliertem Wasser hydrolysiert. Die organische Phase wurde abgetrennt und die wäßrige Phase zweimal mit je 80 ml Diethylether extrahiert. Das Lösungsmittel der vereinigten organischen Phasen wurde im Vakuum entfernt und der hellgelbe Rückstand in 100 ml n-Pentan aufgenommen. Es wurde über Na₂SO₄ getrocknet und das Solvens erneut im Vakuum entfernt. Man erhielt 9,12 g (26,6 mmol, 94 %) 2-[3-(N,N-Dimethylaminoethyl)cyclopentadienyl]-2-fluorenylpropan in Form von Doppelbindungsisomeren als gelb-oranges Öl.

Zu einer Lösung von 8,14 g (24,0 mmol) 2-[3-(N,N-Dimethylaminoethyl)cyclopentadienyl]-2-fluorenylpropan in 80 ml Diethylether wurden bei 0°C langsam 30,0 ml (48,0 mmol) n-BuLi getropft. Die resultierende rote Lösung wurde 16 h bei 20°C gerührt, wobei die dilithiierte Verbindung teilweise in Form eines orange-farbenen Feststoffes ausfiel. Zu dieser Suspension wurde bei -78°C eine Suspension von 5,60 g (24,0 mmol) ZrCl₄ in 40 ml n-Hexan getropft. Die Reaktionsmischung wurde unter langsamem Erwärmen auf 20°C 24 h gerührt. Anschließend wurden die flüchtigen Anteile im Vakuum entfernt, der Rückstand mit 350 ml Toluol extrahiert und vom LiCl abfiltriert. Das tiefrote Filtrat wurde auf 20 ml eingeengt und bei -60°C aufbewahrt. Isopropyliden[3-(N,N-Dimethylaminoethyl)cyi clopentadienyl]-2-fluorenylpropan wurde in Form eines tiefroten Feststoffes (8,30 g, 16,5 mmol, 69 %) isoliert.

### Schmp.: 142°C (Zers.)

¹H-NMR (Toluol-d₈): δ =1,79 (s, 6H, H_{H}), 1,97 (s, 6H, N-CH₃), 2,19-2,21 (m, 1H, N-CH₂-CH₂-), 2,29-2,31 (m, 1H, N-CH₂-CH₂-), 2,51-2,53 (m, 2H, N-CH₂-), 5,17 (pseudo-t, 1H, HG), 5,28 (t, ⁴J=3,1Hz, 1H, H_{F}), 6,00 (pseudo-t, 1H, H_{E}), 6,92-6,97 (m, 2H, H_{D,D'}), 7,23-7,29 (m, 2H, H_{C,C'}), 7,34-7,39 (2xd, ³J=8,9Hz, 2H, B_{B,B'}), 7,75-7,77 (2xd, ³J=3,3Hz, 2H, H_{A,A'}).

### Beispiel 4

Analog zu Beispiel 3 wurde, ausgehend von 2-(N,N-Diisopropyl)ethylcyclopentadien die Verbindung Isopropyliden[3-(N,N-diisopropylaminoethyl)cyclopentadienylfluorenzyl]zirconiumdichlorid hergestellt.

¹H-NMR (C₆D₆): δ = 0,84 (d, ³J=6,6Hz, 6H, CH-CH₃), 0,86 (d, ³J=6,5Hz, 6H, CH-CH₃), 1,84, 1,85 (2s, 6H, H_{H,H'}), 2,52-2,54 (m, 2H, N-CH₂-CH₂-), 2,59-2,62 (m, 2H, N-CH₂-), 2,82-2,84 (sept, ³J=6,6Hz, 2H, CH-CH₃), 5,34 (d, ³J=3,0Hz, 1H, H_{G}), 5,38 (d, ³J=3,0Hz, 1H, H_{E}), 6,09 (s, 1H, H_{F}), 6,99-7,15 (m, 2H, H_{D,D'}), 7,29-7,36 (m, 2H, H_{C,C'}), 7,43-7,49 (2xd, ³=8,9Hz, 2H, HB_{,B'}), 7,84-7,87 (2xd, 3J=4,3Hz, 2H, H_{A,A'}).

### Beispiel 5

Darstellung von Dimethylsilyl(3-Diisopropylaminoethylcyclopentadienyl-Cyclopentadienyl)-Zirconocendichlorid

Zu einer Lösung von 9,25 g (40,0 mmol) Diisopropylaminoethylcyclopentadienyl-Kalium in 40 ml THF wurde bei -30°C eine Lösung von 6,35 g (40,0 mmol) Cyclopentadienyldimethylchlorsilan in 20 ml THF innerhalb von 30 min getropft. Es bildete sich eine gelbe Suspension, die langsam auf 20°C erwärmt wurde. Anschließend wurde für weitere 18 h bei 20°C gerührt. Das Lösungsmittel wurde vollständig im Vakuum entfernt, wobei ein oranges Öl zurückblieb. Beim Extrahieren mit 80 ml Hexan fiel ein weißer Feststoff aus. Nach erneutem Filtrieren verblieb eine gelbe Lösung. Das Lösungsmittel wurde vollständig im Vakuum entfernt und man erhielt 11,2 g (35,5 mmol, 89 %) in Form eines gelben Öls der Verbindung 3-Diisopropylaminoethylcyclopentadienyl-Cyclopentadienyldimethylsilan.

Zu einer Lösung von 10,81 g (34,3 mmol)dieser Verbindung in 100 ml Diethylether wurden bei 0°C langsam 45 ml (70 mmol) n-BuLi-Lösung (1,55 molar in Hexan) getropft. Dabei fiel ein weißer Feststoff aus und die Suspension wurde für weitere 18 h bei 20°C gerührt. Anschließend wurde der luft- und feuchtigkeitsempfindliche Feststoff abfiltriert, mit 20 ml Pentan gewaschen und sorgfältig im Vakuum getrocknet. Es verblieben 9,97 g (30,5 mmol, 89 %) Dilithium-(3-Diisopropylaminoethyl-Cyclopentadienyl)dimethylsilan.

Zu einer Suspension von 6,52 g (19,9 mmol) dieser Verbindung in 100 ml Diethylether wurde bei -60°C langsam 4,64 g (19,9 mmol) ZrCl₄ gegeben. Die Suspension nahm eine gelbe Farbe an und wurde allmählich auf 20°C erwärmt und für weitere 18 h gerührt. Das Lösungsmittel der nun rot-braunen Suspension wurde vollständig im Vakuum entfernt und der Rückstand in 50 ml Toluol aufgenommen. Nach dem Filtrieren verblieb eine orange-braune Lösung. Nach erneutem Evaporieren des Lösungsmittels erhielt man als Rohprodukt 6,73 g (14,1 mmol, 71 %) eines braunen Feststoffes. Nach dem Waschen mit 20 ml Pentan und sorgfältigem Trocknen im Vakuum ließ sich Dimethylsilyl(3-Diisopropylaminoetyhl-Cyclopentadienyl)dimethylsilan als ein gelber Feststoff (4,1 g, 8,6 mmol, 43 %) isolieren.

¹H-NMR (C₆D₆): δ = 0,14 (s, 3H, Si-CH₃), 0,15 (s, 3H, Si-CH₃), 0,91 (d, ³J=6,3Hz, 6H, CH-CH₃), 0,92 (d, ³J=6,3Hz, 6H, CH-CH₃), 2,64-2,68, 2,89-2,96 (2xm, 6H, CH-CH₃, -CH₂-CH₂-), 5,37 (dd, ³J=2,0, 1,8Hz, 1H, Cp-H), 5,44 (d, ³J=2,3Hz, 1H, Cp-H), 5,57 (d, ³J=2,3Hz, 1H, Cp-H), 5,59 (t, ³J=2,7Hz, 1H, Cp-H), 6,70 (dd, ³J=2,2, 1,9Hz, 1H, Cp-H), 6,78 (d³J=2,3Hz, 1H, Cp-H), 6,85 (d, ³J=2,3Hz, 1H, Cp-H).

### Beispiel 6

Darstellung von Dimethylsilyl-bis(3-diisopropylaminoethylcyclopentadienyl)zirconocendichlorid

5,3 g (27,4 mmol) Diisopropylaminoethylcyclopentadien wurden in 15 ml THF gelöst und bei 20°C tropfenweise zu einer Suspension von 1,10 g (27,4 mmol) Kaliumhydrid in 40 ml THF getropft. Nach 1,5 h Rühren bei 20°C wurde zu dieser Lösung bei -30°C eine Lösung von 1,77 g (13,7 mmol) Dimethyldichlorsilan in 10 ml THF getropft. Dabei fiel ein weißer Feststoff aus. Die Suspension wurde allmählich auf 20°C erwärmt und das Rühren für 18 h fortgesetzt. Anschließend wurde das Lösungsmittel vollständig im Vakuum entfernt und der Rückstand mit 60 ml Hexan extrahiert. Nach dem Filtrieren verblieb eine gelbe Lösung. Das Lösungsmittel wurde erneut vollständig im Vakuum entfernt, wobei 5,42 g (12,3 mmol, 90 %) Bis-(3-diisopropylaminoethylcyclopentadienyl)dimethylsilan in Form eines gelben Öls erhalten wurde.

¹H-NMR (C₆D₆): δ = -0,18 (s, br, 3H, Si-CH₃), 0,11 (s, 3H, Si-CH₃), 0,91-1,02 (m, 24H, CH-CH₃), 2,49-3,39 (m, 14H, -CH₂-CH₂-, -CH-, Cp-H-allyl), 6,18-6,87 (m, 6H, Cp-H-vinyl).

Das Produkt wurde analog zu Beispiel 5 in die Di-Lithium-Verbindung überführt.

Zu einer Lösung von 3,85 g (8,5 mmol) dieser Di-Lithium-Verbindung in 50 ml Diethylether wurden bei -60°C langsam 2,0 g (8,6 mmol) ZrCl4 gegeben. Es bildete sich eine gelbe Suspension, die allmählich auf 20°C erwärmt wurde. Es wurde für weitere 18 h bei 20°C gerührt. Anschließend wurde das Lösungsmittel vollständig im Vakuum entfernt und der Rückstand mit 70 ml Toluol extrahiert. Nach dem Filtrieren verblieb eine gelb-orange Lösung. Das Lösungsmittel wurde erneut vollständig im Vakuum entfernt. Man erhielt Dimethylsilyl[bis-(3-diisopropylaminoethylcyclopentadienyl)Zirconocendichlorid in Form eines gelb-orangen Öls (4,0 g, 6,63 mmol, 78 %). Das ¹H-NMR-Spektrum zeigt, daß Dimethylsilyl [bis-(3-diisopropylaminoethylcyclopentadienyl)Zirconocendichlorid im Verhältnis 1:1 als rac- und meso-Isomer vorliegt.

¹H-NMR (C₆D₆): δ = 0,19, 0,20, 0,21 (3xs, 6H, Si-CH₃), 0,90-0,94 (m, 24H, CH-CH₃), 2,66-2,70, 2,90-2,97 (2xm, N-CH₂-CH₂-, N-CH), 5,37 (m, 1H, Cp-H), 5,45 (m, 1H, Cp-H), 5,54 (m, 1H, Cp-H, 5,67 (m, 1H, Cp-H), 6,72 (m, 1H, Cp-H), 6,78 (m, 1H, Cp-H).

### Beispiel 7

### Homopolymerisation von Ethylen

Ein auf die gewünschte Temperatur (s. Tabellen) temperierter 1-1-Laborautoklav wurde mit 200 ml Toluol und 3 ml einer 10 %igen MAO-Lösung in Toluol gefüllt. Anschließend wurden 5 bar Ethylen aufgepreßt. Nach 15 min Rühren wurde die voraktivierte Katalysatorlösung (15 min Reaktionszeit, 1.000 Äquivalente MAO (10 %ige Lösung in Toluol)) über eine Druckbürette hinzugespritzt. Die Polymerisation wurde durch Zugabe von 10 ml Isopropanol abgebrochen. Die polymerhaltige Suspension wurde in 200 ml methanolischer HCl-Lösung (5:1) gegeben und für 3 h gerührt. Nach der Filtration wurde das Polymer an der Luft getrocknet.

### Beispiel 8

### Copolymerisation von Ethylen und Hexen

Ein auf die gewünschte Temperatur (s. Tabellen) temperierter 1-1-Laborautoklav wurde mit 200 ml Toluol und 3 ml einer 10 %igen MAO-Lösung in Toluol und einer bestimmten Menge Hexen gefüllt. Anschließend wurden 5 bar Ethylen aufgepreßt. Nach 15 min Rühren wurde die voraktivierte Katalysatorlösung (15 min Reaktionszeit, 1.000 Äquivalente MAO (10 %ige Lösung in Toluol)) über eine Druckbürette hinzugespritzt. Die Polymerisation wurde durch Zugabe von 10 ml Isopropanol abgebrochen. Die polymerhaltige Suspension wurde in 200 ml methanolischer HCl-Lösung (5:1) gegeben und für 18 h gerührt. Nach der Phasentrennung wurde die Toluol-Phase abgetrennt. Durch Entfernen des Lösungsmittels im Wasserstrahlvakuum wurde das Polymer isoliert.

Die Polymereigenschaften zeigen die folgenden Tabellen.

**Tabelle 1:**

| Temperaturabhängigkeit der Molekulargewichtsverteilung von Ethylenhomopolymeren, katalysiert durch Beispielverbindung 5 | | | |
|---|---|---|---|
| Polymerisations-temperatur (°C) | M_{w} (g/mol) | Mₙ (g/mol) | M_{w}/Mₙ |
| 90 | 54.731 | 12.939 | 4,2 |
| 60 | 389.131 | 22.306 | 17,4 |
| 50 | 584.946 | 42.869 | 13,6 |
| 45 | 1.193.864 | 72.504 | 16,5 |
| 30 | 1.821.768 | 144.989 | 12,6 |

**Tabelle 2:**

| Temperaturabhängigkeit der Molekulargewichtsverteilung von Ethylenhomopolymeren, katalysiert durch Beispielverbindung 3 | | | |
|---|---|---|---|
| Polymerisations-temperatur (°C) | M_{w} (g/mol) | Mₙ (g/mol) | M_{w}/Mₙ |
| 80 | 105.656 | 18.113 | 5,8 |
| 45 | 267.419 | 19.946 | 13,4 |

**Tabelle 3:**

| Temperaturabhängigkeit der Molekulargewichtsverteilung von Ethylen/Hexen-Copolymeren, katalysiert durch Beispielverbindung 5 | | | |
|---|---|---|---|
| Polymerisations-temperatur (°C) | M_{w} (g/mol) | Mₙ (g/mol) | M_{w}/Mₙ |
| 90 | 13.218 | 4.426 | 3,0 |
| 60 | 123.228 | 11.211 | 11,0 |
| 45 | 419.909 | 12.200 | 34,4 |

**Tabelle 4:**

| Molekulargewichtsverteilung von durch unterschiedliche Katalysatorkomplexe katalysierte Ethylenhomopolymeren, Reaktionstemperatur 50°C | | | |
|---|---|---|---|
| Katalysatorkomplex | M_{w} (g/mol) | Mₙ (g/mol) | M_{w} /Mₙ |
| gemäß Beispiel 1 | 824.884 | 54.144 | 15,2 |
| gemäß Beispiel 2 | 707,815 | 56.490 | 12,5 |
| gemäß Beispiel 3 | 584.946 | 42.869 | 13,6 |
| gemäß Beispiel 5 | 294.388 | 59.405 | 5,0 |

## Patentansprüche

1. Verfahren zur Herstellung von Polyolefinen bei Drücken von 5 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann, welches Verfahren dadurch gekennzeichnet ist, daß man die Reaktionstemperatur so einstellt, daß das resultierende Polyolefin eine Molekulargewichtsverteilung M_{W}/M_{N}, gemessen durch Gelpermeationschromatographie, von ≥5,0 aufweist.

2. Verfahren nach Anspruch 1, dadurch gekennzeichnet, daß man als metallorganische Verbindung einen Metallocenkomplex der allgemeinen Formel I einsetzt 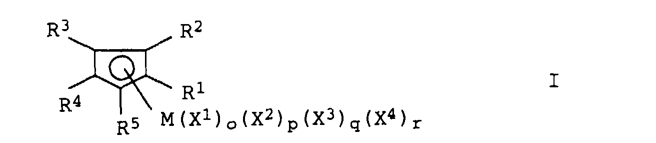 in der die Substituenten und Indices folgende Bedeutung haben:
M Titan, Zirkonium, Hafnium oder Vanadium,
R¹ bis R⁵ Wasserstoff, C₁- bis C₁₀-Alkyl, 5- bis 7-gliedriges Cycloalkyl, das seinerseits ein C₁- bis C₁₀-Aryl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, eine Gruppe mit Lewis-Basen-Funktionalität oder gemeinsam mit einem Rest X¹ bis X⁴ ein Brückenglied zum Metallatom M,
R⁶ C₁- bis C₁₀-Alkyl, C₆- bis C₁₅-Aryl oder C₃- bis C₁₀-Cycloalkyl,
X¹ bis X⁴ Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹², -N^{R12}R¹³ oder 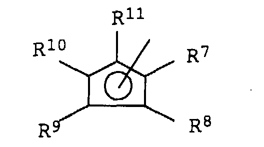 mit
R¹² und R¹³ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
R⁷ bis R¹¹ Wasserstoff, C₁- bis C₁₀-Alkyl, 5 bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹⁴)₃, eine Gruppe mit Lewis-Basen-Funktionalität oder gemeinsam mit einem Rest R¹ bis R⁵ ein Brückenglied zwischen den Cyclopentadienylsystemen,
mit
R¹⁴ C₁- bis C₁₀-Alkyl, C₆- bis C₁₅-Aryl oder C₃- bis C₁₀-Cycloalkyl,
und
o, p, q, r ganze Zahlen im Bereich 0 bis 4, wobei die Summe o+p+q+r+1 der Wertigkeit von M entspricht,
mit der Bedingung, daß entweder mindestens einer der Reste R¹ bis R⁵ oder R⁷ bis R¹¹ eine Gruppe mit Lewis-Basen-Funktionalität bedeutet oder das Brückenglied zwischen den Cyclopentadienylsystemen oder zwischen einem Cyclopentadienylsystem und dem Metallatom M eine solche Gruppe mit Lewis-Basen-Funktionalität trägt.

3. Verfahren nach Anspruch 2, dadurch gekennzeichnet, daß man als metallorganische Verbindung einen verbrückten Metallocenkomplex einsetzt.

4. Verfahren nach Anspruch 2, dadurch gekennzeichnet, daß der Metallocenkomplex der Formel I ein Brückenglied zwischen zwei Cyclopentadienylsystemen aufweist.

5. Verfahren nach Anspruch 4, dadurch gekennzeichnet, daß das Brückenglied zwischen zwei Cyclopentadienylsystemen die Struktur der allgemeinen Formel II aufweist 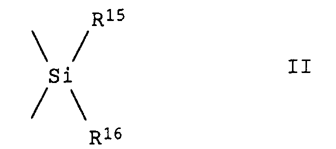 wobei
R¹⁵ und R¹⁶ einen C₁- bis C₂₀-Hydrocarbylrest mit mindestens einem sauerstoff-, schwefel-, stickstoff- oder phosphorhaltendem Substituenten
bedeuten.

6. Verfahren nach den Ansprüchen 1 bis 4, dadurch gekennzeichnet, daß mindestens einer der Reste R¹ bis R⁵ oder R⁷ bis R¹¹ einen Rest der allgemeinen Formel IIIa oder IIIb bedeutet
―(CR¹⁷R¹⁸)ₙ―YR¹⁹R²⁰ IIIa
―(CR¹⁷R¹⁸)ₙ―ZR¹⁹ IIIb
in welchen die Variablen die folgende Bedeutung haben:
R¹⁷ und R¹⁸ Wasserstoff, C₁- bis C₁₀-Alkyl, C₆- bis C₁₅-Aryl oder C₃- bis C₁₀-Cycloalkyl,
R¹⁹ und R²⁰ C₁- bis C₁₀-Alkyl, C₆- bis C₁₅-Aryl oder C₃- bis C₁₀-Cycloalkyl,
n eine ganze Zahl im Bereich von 0 bis 10
Y Stickstoff oder Phosphor und
Z Sauerstoff oder Schwefel.

7. Verfahren nach Anspruch 6, dadurch gekennzeichnet, daß eines der Cyclopentadienylsysteme ein substituiertes oder unsubstituiertes Fluorenylsystem ist.

8. Verfahren nach Anspruch 1, dadurch gekennzeichnet, daß man als metallorganische Verbindung eine Verbindung der allgemeinen Formel IV einsetzt 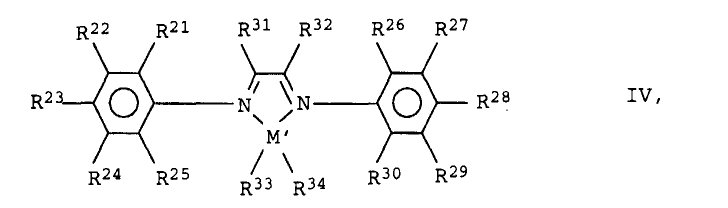 wobei die Variablen die folgende Bedeutung haben:
R²¹ bis R³² Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃ oder eine Gruppe mit Lewis-Basen-Funktionalität, wobei mindestens ein Rest R²¹ bis R³² eine solche Gruppe mit Lewis-Basen-Funktionalität sein muß,
R³³ und R³⁴ Fluor, Chlor, Brom, Jod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹² oder -NR¹²R¹³ und
M' ein Metall der Gruppe VIIIa des Periodensystems.

9. Verfahren nach Anspruch 8, dadurch gekennzeichnet, daß mindestens einer der Reste R²¹ bis R³² ein Rest der allgemeinen Formel IIIa oder IIIb ist.

10. Verwendung einer metallorganischen Verbindung gemäß den Ansprüchen 1 bis 9 zur Herstellung von Polyolefinen mit einer Molekulargewichtsverteilung M_{W}/M_{N}, gemessen durch Gelpermeationschromatographie, von ≥5,0.
